# EUROPÄISCHE PATENTSCHRIFT

(11) **EP 2 328 712 B1**
(45) Veröffentlichungstag und Bekanntmachung des Hinweises auf die Patenterteilung: **22.02.2017**
(21) Anmeldenummer: 09740036.0
(22) Anmeldetag: 08.09.2009
(51) Int. Cl.: B23K 26/38, B23K 26/08

(54) **VERFAHREN ZUM SCHNEIDGASLOSEN LASERSCHMELZSCHNEIDEN**
LASER CUTTING METHOD WITHOUT CUTTING GAS
MÉTHODE DE DÉCOUPE AU LASER SANS GAZ DE TRAVAIL

(30) Priorität: 17.09.2008 DE 102008047761; 15.05.2009 DE 102009021599
(43) Veröffentlichungstag der Anmeldung: 08.06.2011
(73) Patentinhaber: TRUMPF Laser GmbH, 78713 Schramberg (DE)
(72) Erfinder: SCHÄFER, Peter, 78713 Schramberg (DE); OLSCHOWSKY, Peter, 78713 Schramberg (DE); MELBERT, Hubertus, 70839 Gerlingen (DE)
(74) Vertreter: Kohler Schmid Möbus Patentanwälte
(86) Internationale Anmeldenummer: PCT/DE2009/001247
(87) Internationale Veröffentlichungsnummer: WO 2010/031379

(56) Entgegenhaltungen:
- EP-A1- 1 475 182
- WO-A1-2008/052547
- DE-A1-102007 062 212

## Beschreibung

Die vorliegende Erfindung betrifft ein Verfahren zum Laserschmelzschneiden eines Werkstücks insbesondere aus Metall.

Eine derartiges Laserschmelzschneidverfahren ist aus der WO 2008/052547 A1 bekannt.

Beim bekannten Laserschmelzschneiden wird in dem Werkstück mittels eines Laserstrahls eine Schnittfuge aufgeschmolzen und das dabei aufgeschmolzene Material mittels eines Schneidgases, wie z.B. Stickstoff oder Argon, aus der Schnittfuge ausgetrieben. Neben dem bei Drücken bis zu 20 bar hohen Verbrauch des Schneidgases ist auch die Zuführung des Schneidgases sowohl hinsichtlich der Zugänglichkeit an der Bearbeitungsstelle als auch der Nachführung problematisch. Dies zeigt sich insbesondere bei sogenannten Remote-Anwendungen, bei denen der Laserstrahl über eine Scanneroptik ohne Verfahrbewegung des Bearbeitungskopfes ein weites Bearbeitungsfeld abdecken kann. Die DE 102 04 993 A1 schlägt dazu vor, an der Scanneroptik (Laserscanner) Gasdüsen beweglich anzubringen und diese durch eine Ansteuerung in Abhängigkeit der Strahlablenkung nachzuführen, damit die Gasströmung und der aus dem Laserscanner austretende Laserstrahl auf der Werkstückoberfläche zusammentreffen. Nachteilig sind hierbei neben dem nach wie vor hohen Gasverbrauch die vorhandene Störkontur der Gasdüsen bzw. die größeren Abmessungen des Bearbeitungskopfes sowie der Aufwand der steuerungstechnischen Integration. Zudem ist die Ablenkgeschwindigkeit des Laserstrahls durch die maximale Verfahrgeschwindigkeit der Gasdüsen limitiert.

Beim Sublimier- oder auch Sublimationsschneiden, bei dem das Material in der Schnittfuge durch Laserpulse hoher Leistungsdichte (höher als beim bekannten Laserschmelzschneiden) möglichst schmelzarm verdampft wird, kann auf ein Schneidgas verzichtet werden, da durch den Materialdampf in der Schnittfuge ein ausreichend hoher Druck erzeugt wird, der die Schmelzanteile nach oben und/oder unten aus der Schnittfuge oder dem Abtragbereich austreibt. Je nach Anwendungsfall wird die Bearbeitungsstelle über ein Prozessgas, wie z.B. Stickstoff, Argon oder Helium, zum Schutz vor Oxidation abgeschirmt. Für die Durchführung des Verfahrens sind allerdings hohe Laserleistungsdichten erforderlich, so das die Abtragrate und somit die Schnitttiefe in der Praxis, insbesondere bei Metallen, begrenzt ist. Mit zunehmender Materialdicke erfordert das Verfahren aufgrund geringer Abtragsvolumina eine mehrfache Konturbearbeitung.

Die eingangs genannte WO 2008/052547 A1 offenbart ein Laserschneidverfahren mit zwei Laserstrahlen, nämlich mit einem vorlaufenden ersten "Schmelzstrahl" und einem nacheilenden zweiten Laserstrahl zur Erhöhung des Schmelzaustriebs über die Generierung eines Gasdrucks.

Weiterhin ist aus der EP 1 475 182 A1 ein Verfahren zum Laserstrahlschneiden mit einem durch eine Düsenöffnung definierten Scanfeld bekannt. Die Düse gewährleistet den für die erforderliche Abtragsleistung benötigten Gasdruck.

Demgegenüber ist es Aufgabe der vorliegenden Erfindung, ein Verfahren zum Laserschmelzschneiden anzugeben, bei dem auf eine Schneidgaszuführung mit den damit verbundenen Nachteilen auch bei größeren Blechdicken verzichtet werden kann.

Diese Aufgabe wird erfindungsgemäß gelöst durch ein Verfahren zum schneidgaslosen Laserschmelzschneiden eines Werkstücks insbesondere aus Metall, wobei in dem Werkstück mittels eines einzigen Laserstrahls eine Schnittfuge aufgeschmolzen wird und dabei der Laserstrahldurchmesser im Arbeitspunkt, also je nach Werkstückdicke auf oder innerhalb des Werkstücks, derart gewählt wird, dass er im Bereich von ca. 0,3 und ca. 3 mm, vorzugsweise ca. 0,5 bis ca. 1 mm, liegt und das aufgeschmolzene Material ohne ein Schneidgas aus der Schnittfuge ausgetrieben wird.

Erfindungsgemäß ist erkannt worden, dass bei vergrößertem Laserstrahldurchmesser schon der in der Schnittfuge im Bereich der Schneidfront entstehende Materialdampf und der daraus resultierende Dampfdruck ausreichen, um die Schmelze an der Schneidfront vorwiegend nach unten auszutreiben. Der Laserstrahldurchmesser im Arbeitspunkt kann durch den Fokus selbst oder durch eine Defokussierung vom Arbeitspunkt gebildet werden.

Vorzugsweise wird für 0,5 bis 5mm dicke Stahlbleche der Laserstrahldurchmesser im Arbeitspunkt auf mindestens das ca. 1,5-fache, insbesondere auf das ca. 1,5- bis ca. 7-fache, des zum Laserschmelzschneiden des Werkstücks mit einem Schneidgas erforderlichen maximalen Laserstrahldurchmessers von 0,10 - 0,25 mm im Arbeitspunkt eingestellt. Wie Versuche gezeigt haben, kann der Laserstrahldurchmesser im Arbeitspunkt sogar bis zum 15- bis 30-fachen des Durchmessers konventioneller Laserschmelzschneidverfahren mit Schneidgas betragen. Dies verwundert umso mehr, als dass die durch den größeren Laserstrahldurchmesser im Arbeitspunkt größere Schnittbreite einen ausreichenden Druckaufbau innerhalb der Schnittfuge eigentlich nicht vermuten lässt.

Vorzugsweise werden die Leistungsdichte zum Aufschmelzen der Schnittfuge und die Vorschubgeschwindigkeit des Laserstrahls relativ zum Werkstück, so gewählt, dass der Prozess des Schmelzaustriebs ohne Schneidgas unterstützt wird.

Bevorzugt wird für 0,5 bis 5mm dicke Stahlbleche die Leistungsdichte des Laserstrahls zum Aufschmelzen der Schnittfuge gegenüber der bei gleicher Vorschubgeschwindigkeit zum Laserschmelzschneiden des Werkstücks mit Schneidgas erforderlichen Leistungsdichte von 100 - 300 kW/mm² reduziert.

Gegenüber konventionellen Laserschmelzschneidverfahren mit Schneidgas kann erfindungsgemäß die Leistungsdichte des Laserstrahls auf dem Werkstück reduziert werden. Bevorzugt liegt die Leistungsdichte auf dem Werkstück dabei im Bereich vom konventionellen Laserstrahlschweißen, wobei im Vergleich zum konventionellen Laserschweißen beim Einschweißen ins volle Material bei einer Einschweißtiefe gleich der Werkstückdicke die Vorschubgeschwindigkeit reduziert, insbesondere auf bis zu 30 bis 60 % vermindert wird. Bei höheren Vorschubgeschwindigkeiten wird wegen des dann schmaleren Schmelzbereiches die Oberflächenspannung des aufgeschmolzenen Materials (Schmelze) durch den Materialdampf und somit -druck nicht mehr überwunden. Limitiert wird die Reduzierung der Vorschubgeschwindigkeit andererseits durch einen daraus resultierenden zu hohen Wärmeeintrag mit damit verbundenen größeren Schmelzvolumina, die über den Materialdampf nicht mehr ausgetrieben werden können. Hier, insbesondere bei Vorschubgeschwindigkeiten kleiner ca. 1,5 m/min, setzt wieder der Schweißprozess ein.

Da eine Schneidgaszuführung mit ihren oben genannten Nachteilen nicht erforderlich ist, ist das erfindungsgemäße schneidgaslose Laserschmelzschneidverfahren flexibel einsetzbar, insbesondere auch in Verbindung mit Systemen zur Remote-Bearbeitung und/oder an schwer zugänglichen Stellen.

Unabhängig von der Verwendung eines Systems zur Remote-Bearbeitung oder eines Systems mit feststehender Optik, bei dem die Strahlführung ausschließlich über die Bewegung des Bearbeitungskopfes über eine Handhabungseinrichtung erfolgt, sind basierend auf der Erfindung Standard-Optiken, insbesondere Schweißoptiken, einsetzbar. Besonders vorteilhaft ist in diesem Zusammenhang die Option, Schweiß- und Schneidaufgaben, insbesondere in einem Blechdickenbereich von ca. 0,5 bis ca. 5 mm, ohne Umrüstaufwand durchführen zu können.

Bevorzugt werden die Leistungsdichte des Laserstrahls zum Aufschmelzen der Schnittfuge und die Vorschubgeschwindigkeit des Laserstrahls relativ zum Werkstück derart gewählt, dass das aufgeschmolzene Material zumindest größtenteils auf der dem Laserstrahl gegenüberliegenden Werkstückseite aus der Schnittfuge ausgetrieben wird. Wie Versuche gezeigt haben, weist der Schmelzaustrieb an der Austrittsseite (Blechunterseite) in Schneidvorschubrichtung weisende Anteile auf. Bei konventionellen Schmelzschneidverfahren mit Schneidgas sind diese primär dem Schneidvorschubrichtung entgegengerichtet. Damit gleichbleibende Prozessbedingungen, insbesondere bei großen Brennweiten, wie beispielsweise bei der Remote-Bearbeitung und dort insbesondere über das gesamte Bearbeitungsfeld, und/oder bei stark metalldampfhaltiger Umgebungsluft immer gewährleistet sind, wird in einer weiteren bevorzugten Variante des erfindungsgemäßen Laserschneidverfahrens im Bereich zwischen der Optik und dem Werkstück Gas (vorzugsweise Luft) eingeblasen und/oder der Metalldampf abgesaugt, um die metalldampfhaltige Umgebungsluft auf einen werkstücknahen Bereich, insbesondere auf einen Bereich bis maximal 100 bis 150 mm von der Bearbeitungszone entfernt, zu begrenzen. Durch die stark metalldampfhaltige Umgebungsluft würde ansonsten die Fokuslage vom Laserstrahl verändert und/oder die Laserleistung gedämpft.

Vorzugsweise weist der mindestens eine Gasstrom eine so geringe Strömungsgeschwindigkeit auf, dass die Bearbeitungszone des Werkstücks durch den Gasstrom nicht beeinflusst wird. Weiterhin kann der mindestens eine Gasstrom in Strahlrichtung des Laserstrahls schräg auf die Bearbeitungszone und/oder schräg auf einen Bereich vor der Bearbeitungszone gerichtet werden. Vorteilhaft wird der mindestens eine Gasstrom auf den fokussierten Laserstrahls divergent gerichtet. Bevorzugt werden mehrere Gasströme um den Laserstrahl herum erzeugt, um die metalldampfhaltige Umgebungsluft auf den werkstücknahen Bereich zu begrenzen.

Mit zumindest einer geeigneten Gasdüse wird also zumindest ein Gasstrom mit relativ geringem Volumenstrom in Richtung des fokussierten Laserstrahls auf die Bearbeitungs- bzw. Fügezone gerichtet, der den Laserstrahlweg durchdringt bzw. diesen zumindest partiell überdeckt. Der Gasstrom erfolgt also von oben auf das Werkstück. Die Gasdüse kann in Form einer Koaxialdüse oder auch mehrerer Einzeldüsen um den Laserstrahl herum angeordnet sein. Alternativ kann der Gasstrom parallel zum Werkstück erfolgen. Aufgabe des Gasstroms ist es dabei nicht, eine Schneid- und/oder Schutzgaswirkung auf dem Werkstück zu erreichen, sondern den Strahlungsraum des einfallenden Laserlichtes von metalldampfhaltiger Umgebungsluft möglichst freizuhalten. Je nach Beabstandung der Düse(n) von der Bearbeitungszone sind die Orientierung der Gaszuführung sowie die Durchflussmengen anzupassen. Insbesondere wenn die Gaszuführung mit dem Bearbeitungskopf gekoppelt ist, ist bei einer größeren Brennweite und somit ggf. größerem Abstand von der Bearbeitungszone die Durchflussmenge zu erhöhen und die Ausrichtung der Düsen gegenüber kleineren Brennweiten anzupassen. Insbesondere bei der Verwendung von Laserbearbeitungsköpfen zur Remote-Bearbeitung ist die Gaszuführung bei Vergrößerung der Brennweite zunehmend parallel zum Laserstrahl auszurichten, um eine Begrenzung der metalldampfhaltigen Umgebungsluft auf einen werkstücknahen Bereich zu gewährleisten.

Die Erfindung betrifft schließlich noch die Verwendung einer Maschine zum Laserschmelzschneiden eines Werkstücks mit Schneidgas auch zum schneidgaslosen Laserschmelzschneiden eines Werkstücks gemäß Anspruch 9. Zum Umschalten vom konventionellen Laserschmelzschneiden mit Schneidgas auf schneidgasloses Laserschmelzschneiden braucht lediglich der Laserstrahldurchmesser vergrößert und ggf. die Leistungsdichte des Laserstrahls auf dem Werkstück reduziert und die Schneidvorschubgeschwindigkeit entsprechend eingestellt zu werden.

Es zeigen:
- Fig. 1: eine erste Variante des erfindungsgemäßen Verfahrens zum schneidgaslosen Laserschmelzschneiden;
- Fig. 2: eine zweite Variante des erfindungsgemäßen Verfahrens zum schneidgaslosen Laserschmelzschneiden, wobei mehrere Gasströme mit relativ geringem Volumenstrom auf die Bearbeitungszone und den Bereich oberhalb der Bearbeitungszone gerichtet werden; und
- Fig. 3: eine dritte Variante des erfindungsgemäßen Verfahrens zum schneidgaslosen Laserschmelzschneiden, wobei die beim Laserschneiden entstehende metalldampfhaltige Umgebungsluft abgesaugt wird.

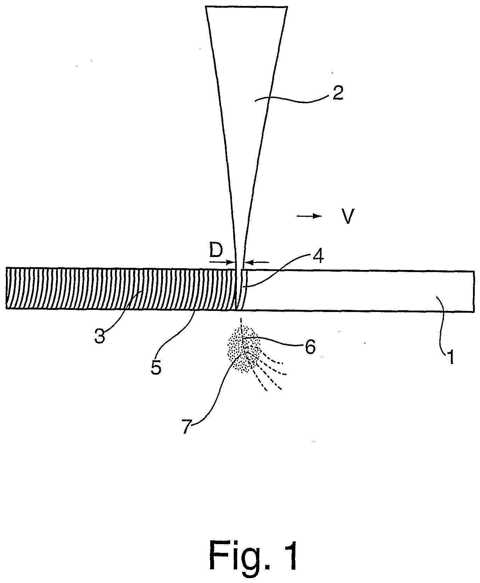

**Fig. 1** zeigt schematisch das erfindungsgemäße Verfahren zum schneidgaslosen Laserschmelzschneiden, bei dem in einem Werkstück **1** aus Metall mittels eines Laserstrahls **2** eine Schnittfuge **3** aufgeschmolzen wird. Dabei werden die Leistungsdichte des Laserstrahls 2 zum Aufschmelzen der Schnittfuge 3 und die Vorschubgeschwindigkeit **v** des Laserstrahls 2 relativ zum Werkstück 1 derart gewählt, dass das aufgeschmolzene Material (Schmelze) **4** ohne ein Schneidgas aus der Schnittfuge 3 ausgetrieben wird, und zwar größtenteils auf der dem Laserstrahl 2 gegenüberliegenden Werkstückunterseite **5.** Das so aus der Schnittfuge 3 auf der Werkstückunterseite 5 ausgetriebene Material (Schmelze, Schlacke) ist mit **6** und der dabei entstehende Rauch ist mit **7** bezeichnet.

Versuche haben gezeigt, dass bei gegenüber dem konventionellen Laserschmelzschneiden mit einem Schneidgas vergrößertem Laserstrahldurchmesser und insbesondere auch reduzierter Leistungsdichte und reduzierter Vorschubgeschwindigkeit v der in der Schnittfuge 3 herrschende entstehende Materialdampf und der daraus resultierende Druck ausreichen, um das dort aufgeschmolzene Material 4 an der Schneidfront vorwiegend nach unten auszutreiben. Der Schmelzaustrieb weist an der Werkstückunterseite 5 in Vorschubrichtung v weisende Anteile auf.

Im Vergleich zum konventionellen Laserschmelzschneiden mit einem Schneidgas wird beim schneidgaslosen Laserschmelzschneiden über die Aufweitung des Durchmessers **D** des Laserstrahls 2 auf dem Werkstück 1 ein vergrößerter Schnittspalt bzw. Schnittfuge 3 realisiert, so dass über die Schmelz- und Dampfdruckbildung ein Austrieb der Schmelze ohne Schneidgas ermöglicht wird. Der Durchmesser D kann bis zum 30-fachen, vorzugsweise bis zum 15-fachen des Durchmessers konventioneller Laserschmelzschneidverfahren betragen, insbesondere das 1,5- bis 7-fache. Typischerweise liegt der Durchmesser D beim schneidgaslosen Laserschmelzschneiden im Bereich von 0,3 bis 3 mm, insbesondere 0,5 bis 1 mm.

Die Leistungsdichte des Laserstrahls 2 liegt bevorzugt im Bereich der Leistungsdichte beim Laserschweißen, wobei die Vorschubgeschwindigkeit v des Laserstrahls 2 auf dem Werkstück 1 im Vergleich zum Laserschweißen beim Einschweißen ins volle Material bei gleicher Einschweißtiefe wie Blechdicke reduziert, insbesondere auf bis zu 30 bis 60 % vermindert wird. Wie Versuche gezeigt haben, wird bei höheren Vorschubgeschwindigkeiten die Oberflächenspannung wegen des dann schmaleren Schmelzbereiches durch den Materialdampf und somit -druck nicht mehr überwunden. Limitiert wird die Reduzierung der Vorschubgeschwindigkeit v andererseits durch einen daraus resultierenden zu hohen Wärmeeintrag mit damit verbundenen größeren Schmelzvolumina, die über den Materialdampf nicht mehr ausgetrieben werden können. Hier, insbesondere bei Vorschubgeschwindigkeiten v von kleiner 1,5 m/min, setzt wieder der Laserschweißprozess ein.

Unabhängig von der Verwendung eines Systems zur Remote-Bearbeitung oder eines Systems mit feststehender Optik, bei dem die Strahlführung ausschließlich über die Bewegung des Bearbeitungskopfes erfolgt, sind beim schneidgaslosen Laserschmelzschneiden Standard-Optiken, insbesondere Schweißoptiken, einsetzbar. Besonders vorteilhaft ist in diesem Zusammenhang die Option, Schweiß- und Schneidaufgaben, insbesondere in einem Blechdickenbereich von 0,5 bis 5 mm, ohne Umrüstaufwand durchführen zu können. Zum Umschalten vom konventionellen Laserschweißen auf schneidgasloses Laserschmelzschneiden braucht lediglich die Vorschubgeschwindigkeit reduziert zu werden, insbesondere auf bis zu 30 bis 60 % der Vorschubgeschwindigkeit beim konventionellen Laserschweißen, wenn die Schweißanwendung die Anforderung an den Laserstrahldurchmesser zum schneidgaslosen Laserstrahlschmelzschneiden erfüllt.

Im Folgenden sind die wesentlichen Unterschiede zwischen dem schneidgaslosen Laserschmelzschneiden und dem herkömmlichen Laserschmelzschneiden mit Schneidgas für ein in etwa 0,5 bis 5 mm dickes Stahlblech zusammengestellt:

| | Laserschmelzschneiden mit Schneidgas | schneidgasloses Laserschmelzschneiden |
|---|---|---|
| Schneidgas | vorhanden | entfällt |
| Schneiddüse | vorhanden | entfällt |
| Scanneroptik | nur mit erheblichem Aufwand realisierbar | realisierbar |
| Laserstrahldurchmesser | | |
| Im Arbeitspunkt | 0,10-0,25 mm | 0,3-3,0 mm |
| Arbeitsabstandstoleranz | ≈ 1 mm | ≤ 10 mm |
| Laserleistungsdichte | 100-300 kW/mm² | 10-50 kW/mm² |

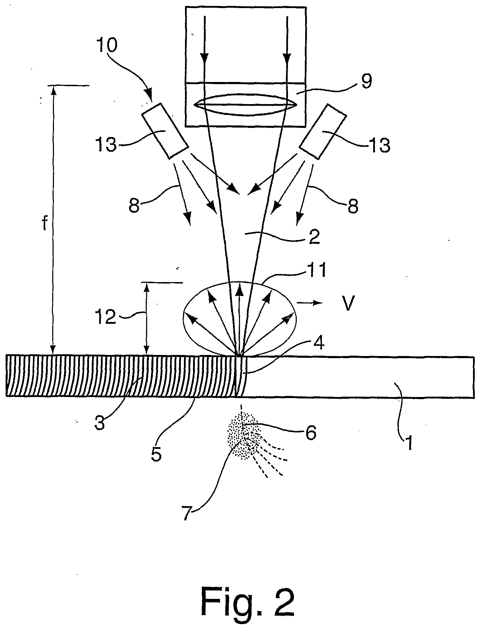

Von der Fig. 1 unterscheidet sich das in **Fig. 2** gezeigte Verfahren dadurch, dass hier zusätzlich mehrere Gasströme **8** mit relativ geringem Volumenstrom von oben auf die Bearbeitungszone des Werkstücks 1 und den Bereich oberhalb der Bearbeitungszone gerichtet werden. Dazu ist an einer Fokussieroptik **9** mit einer Brennweite **f,** insbesondere mit einer Brennweite von mindestens 200 mm, eine Begrenzungseinrichtung **10** vorgesehen, die die beim Laserschneiden entstehende metalldampfhaltige Umgebungsluft **11** innerhalb des fokussierten Laserstrahls 2 auf einen werkstücknahen Bereich **12,** insbesondere auf einen Bereich bis maximal 100 bis 150mm vor der Bearbeitungszone begrenzt.

Die Begrenzungseinrichtung 10 weist mehrere um den einfallenden Laserstrahl 2 herum angeordnete Gasdüsen **13** auf, die jeweils einen divergenten Gasstrom 8 mit relativ geringem Volumenstrom von oben auf die Bearbeitungszone und den Bereich oberhalb der Bearbeitungszone richten. Die Gasströme 8 weisen eine so geringe Strömungsgeschwindigkeit auf, dass die Bearbeitungszone des Werkstücks 1 durch den Gasstrom nicht beeinflusst wird. Das Gas ist bezüglich des Laserstrahls 2 reaktionslos und vorzugsweise Luft. Aufgabe der Gasströme 8 ist es dabei nicht, eine Schneid- und/oder Schutzgaswirkung auf dem Werkstück 1 zu erreichen, sondern das Gemisch 11 aus dem werkstückfernen Strahlungsraum des einfallenden Laserstrahls 2 zu verdrängen. Daher ist eine Gasströmung mit geringer Strömungsgeschwindigkeit und geringem Druck (z.B. 0,2 bar) ausreichend. Dem Fachmann ist bewusst, dass mit zunehmenden Abständen von Werkstück und Gaszuführung eine entsprechende Druckanpassung, im Sinne einer Druckerhöhung, vorgenommen werden sollte.

In einer nicht gezeigten Variante sind die mehreren Gasdüsen 13 durch eine einzige koaxial zum Laserstrahl 2 angeordnete Ringdüse ersetzt.

Prinzipiell kann die Gaszuführung sowohl schräg als auch senkrecht auf die Bearbeitungsstelle ausgerichtet werden, wobei die Gasströmung den Laserstrahl 2 bevorzugt zumindest teilweise durchdringt.

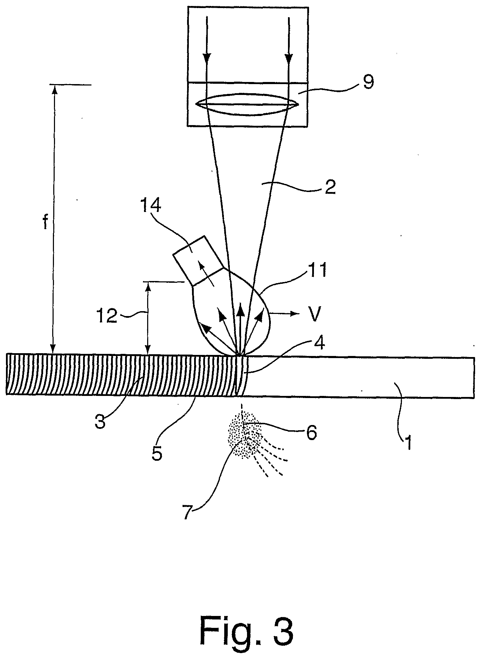

Von der Fig. 1 unterscheidet sich das in **Fig. 3** gezeigte Verfahren dadurch, dass hier zusätzlich die beim Laserschneiden entstehende metalldampfhaltige Umgebungsluft 11 abgesaugt wird. Dazu ist seitlich neben dem einfallenden Laserstrahl 2 eine Absaugeinrichtung **14** vorgesehen, die einen Unterdruck zum Absaugen der metalldampfhaltigen Umgebungsluft 11 erzeugt. Die Absaugeinrichtung 14 ist im Abstand von maximal 100 bis 150mm vor der Bearbeitungszone angeordnet, so dass die metalldampfhaltige Umgebungsluft 11 innerhalb des fokussierten Laserstrahls 2 auf den werkstücknahen Bereich 12 begrenzt wird.

## Patentansprüche

1. Verfahren zum schneidgaslosen Laserschmelzschneiden eines Werkstücks (1) insbesondere aus Metall,
**dadurch gekennzeichnet,**
**dass** in dem Werkstück (1) mittels eines einzigen Laserstrahls (2) eine Schnittfuge (3) aufgeschmolzen wird und dabei der Laserstrahldurchmesser (D) im Arbeitspunkt derart vergrößert gewählt wird, dass er im Bereich von ca. 0,3 und ca. 3 mm, vorzugsweise ca. 0,5 bis ca. 1 mm, liegt und das aufgeschmolzene Material (4) ohne ein Schneidgas aus der Schnittfuge (3) ausgetrieben wird.

2. Verfahren nach Anspruch 1, **dadurch gekennzeichnet, dass** für 0,5 bis 5mm dicke Stahlbleche der Laserstrahldurchmesser (D) im Arbeitspunkt auf mindestens das ca. 1,5-fache, insbesondere auf das ca. 1,5- bis ca. 7-fache, des zum Laserschmelzschneiden des Werkstücks (1) mit einem Schneidgas erforderlichen Laserstrahldurchmessers von 0,10 - 0,25 mm im Arbeitspunkt eingestellt wird.

3. Verfahren nach einem der vorhergehenden Ansprüche, **dadurch gekennzeichnet, dass** für 0,5 bis 5mm dicke Stahlbleche die Leistungsdichte des Laserstrahls (2) zum Aufschmelzen der Schnittfuge (3) gegenüber der bei gleicher Vorschubgeschwindigkeit (v) zum Laserschmelzschneiden des Werkstücks (1) mit einem Schneidgas erforderlichen Leistungsdichte von 100 - 300 kW/mm² reduziert wird.

4. Verfahren nach einem der vorhergehenden Ansprüche, **dadurch gekennzeichnet, dass** die beim Laserschneiden entstehende metalldampfhaltige Umgebungsluft (11) durch mindestens einen, auf die Bearbeitungszone des Werkstücks (1) gerichteten Gasstrom (8) auf einen werkstücknahen Bereich (12) vor der Bearbeitungszone des Werkstücks (1) begrenzt wird, insbesondere auf einen werkstücknahen Bereich (12), der sich von der Bearbeitungszone des Werkstücks (1) bis maximal 150mm, vorzugsweise maximal 100mm, vor die Bearbeitungszone erstreckt.

5. Verfahren nach Anspruch 4, **dadurch gekennzeichnet, dass** der mindestens eine Gasstrom (8) in Strahlrichtung des Laserstrahls (2) schräg auf die Bearbeitungszone und/oder schräg auf einen Bereich vor der Bearbeitungszone gerichtet wird.

6. Verfahren nach Anspruch 4 oder 5, **dadurch gekennzeichnet, dass** der mindestens eine Gasstrom (8) auf den fokussierten Laserstrahl (2) divergent gerichtet wird.

7. Verfahren nach einem der Ansprüche 4 bis 6, **dadurch gekennzeichnet, dass** die metalldampfhaltige Umgebungsluft (11) durch mehrere Gasströme (8), die um den Laserstrahl (2) herum erzeugt werden, auf den werkstücknahen Bereich (12) begrenzt wird.

8. Verfahren nach einem der Ansprüche 4 bis 7, **dadurch gekennzeichnet, dass** die beim Laserschneiden entstehende metalldampfhaltige Umgebungsluft (11) außerhalb des werkstücknahen Bereichs abgesaugt wird.

9. Verwendung einer Maschine zum Laserschweißen von Werkstücken (1) oder einer Maschine zum Laserschmelzschneiden von Werkstücken (1) mit einem Schneidgas auch zum schneidgaslosen Laserschmelzschneiden von Werkstücken (1), **dadurch gekennzeichnet, dass** die Maschine gemäß dem Verfahren nach Anspruch 1 betrieben wird.

## Claims

1. Method for laser fusion cutting of a workpiece (1), in particular made of metal, without cutting gas,
**characterized in that**
a kerf (3) is melted in the workpiece (1) by means of one single laser beam (2), thereby selecting the laser beam diameter (D) in the working point to be enlarged in such a fashion that it is in a range between approximately 0.3 and approximately 3mm, preferably between approximately 0.5 and approximately 1 mm, and that the molten material (4) is expelled from the kerf (3) without cutting gas.

2. Method according to claim 1, **characterized in that** for sheet steels of a thickness of 0.5 to 5mm, the laser beam diameter (D) in the working point is adjusted to at least approximately 1.5 times, in particular approximately 1.5 to approximately 7 times, the laser beam diameter of 0.10 to 0.25mm in the working point required for laser fusion cutting of the workpiece (1) with cutting gas.

3. Method according to any one of the preceding claims, **characterized in that** for sheet steels of a thickness of 0.5 to 5mm, the power density of the laser beam (2) for melting the kerf (3) is reduced compared to the power density of 100 - 300 kW/mm² required for laser fusion cutting of the workpiece (1) with cutting gas, with the feed rate (v) being the same.

4. Method according to any one of the preceding claims, **characterized in that** the ambient air (11) which contains metal vapor and is generated during laser cutting is confined to an area (12) close to the workpiece in front of the processing zone of the workpiece (1) by at least one gas flow (8) which is directed onto the processing zone of the workpiece (1), in particular to an area (12) close to the workpiece which extends from the processing zone of the workpiece (1) to maximally 150mm, preferably maximally 100mm, in front of the processing zone.

5. Method according to claim 4, **characterized in that** the at least one gas flow (8) is directed in the beam direction of the laser beam (2) at an inclined angle onto the processing zone and/or at an inclined angle onto an area in front of the processing zone.

6. Method according to claim 4 or 5, **characterized in that** the at least one gas flow (8) is divergently directed onto the focussed laser beam (2).

7. Method according to any one of the claims 4 through 6, **characterized in that** the ambient air (11) containing metal vapor is confined by several gas flows (8), which are generated around the laser beam (2), onto the area (12) close to the workpiece.

8. Method according to any one of the claims 4 through 7, **characterized in that** the ambient air (11), which contains metal vapor and is generated during laser cutting, is extracted by suction outside of the area close to the workpiece.

9. Use of a machine for laser welding of workpieces (1) or use of a machine for laser fusion cutting of workpieces (1) with a cutting gas also for laser fusion cutting of workpieces (1) without cutting gas, **characterized in that** the machine is operated in accordance with the method according to claim 1.

## Revendications

1. Procédé de découpage d'une pièce (1), en particulier métallique, en atmosphère inerte au laser sans gaz de coupe,
**caractérisé en ce qu'**on ouvre par fusion une saignée (3) dans la pièce (1) au moyen d'un unique faisceau laser (2) et le diamètre (D) du faisceau laser est alors choisi au point de travail avec un grossissement tel qu'il se situe dans la plage allant d'environ 0,3 à environ 3 mm, de préférence d'environ 0,5 à environ 1 mm, et que la matière fondue (4) est expulsée de la saignée (3) sans gaz de coupe.

2. Procédé selon la revendication 1, **caractérisé en ce que**, pour des tôles d'acier d'une épaisseur de 0,5 à 5 mm, le diamètre (D) du faisceau laser au point de travail est réglé à au moins environ 1,5 fois, en particulier environ 1,5 à 7 fois, le diamètre de faisceau laser de 0,10 à 0,25 mm au point de travail qui est nécessaire pour le découpage en atmosphère inerte au laser de la pièce (1) avec un gaz de coupe.

3. Procédé selon l'une des revendications précédentes, **caractérisé en ce que**, pour des tôles d'acier d'une épaisseur de 0,5 à 5 mm, la puissance volumique du faisceau laser (2) pour ouvrir par fusion la saignée (3) est réduite de 100 à 300 kW/mm² par rapport à la puissance volumique nécessaire pour le découpage en atmosphère inerte au laser de la pièce (1) avec un gaz de coupe à la même vitesse d'avancement (v).

4. Procédé selon l'une des revendications précédentes, **caractérisé en ce que** l'air ambiant (11) contenant de la vapeur métallique qui est produit lors du découpage au laser est, par au moins un flux de gaz (8) dirigé sur la zone d'usinage de la pièce (1), limité à une région (12) proche de la pièce en avant de la zone d'usinage de la pièce (1), en particulier à une région (12) proche de la pièce qui s'étend de la zone d'usinage de la pièce (1) jusqu'à au plus 150 mm, de préférence au plus 100 mm, en avant de la zone d'usinage.

5. Procédé selon la revendication 4, **caractérisé en ce que** le flux de gaz (8) au moins unique est dirigé, dans la direction de rayonnement du faisceau laser (2), en oblique sur la zone d'usinage et/ou en oblique sur une région en avant de la zone d'usinage.

6. Procédé selon la revendication 4 ou 5, **caractérisé en ce que** le flux de gaz (8) au moins unique est dirigé de manière divergente sur le faisceau laser (2) focalisé.

7. Procédé selon l'une des revendications 4 à 6, **caractérisé en ce que** l'air ambiant (11) contenant de la vapeur métallique est limité à la région (12) proche de la pièce par plusieurs flux de gaz (8) qui sont produits tout autour du faisceau laser (2).

8. Procédé selon l'une des revendications 4 à 7, **caractérisé en ce que** l'air ambiant (11) contenant de la vapeur métallique qui est produit lors du découpage au laser est évacué par aspiration en dehors de la région proche de la pièce.

9. Utilisation d'une machine pour le découpage au laser de pièces (1) ou d'une machine pour le découpage en atmosphère inerte au laser de pièces (1) avec un gaz de coupe, également pour le découpage en atmosphère inerte au laser de pièces (1) sans gaz de coupe, **caractérisée en ce que** la machine est exploitée d'après le procédé selon la revendication 1.
